# EUROPÄISCHE PATENTSCHRIFT

(11) **EP 2 742 511 B1**
(45) Veröffentlichungstag und Bekanntmachung des Hinweises auf die Patenterteilung: **02.09.2020**
(21) Anmeldenummer: 12762539.0
(22) Anmeldetag: 06.08.2012
(51) Int. Cl.: H01B 3/30, C09D 179/08, C08G 73/16, H01B 13/14, H01B 13/06

(54) **LÖSEMITTELFREIE DRAHTLACKZUSAMMENSETZUNG**
SOLVENT-FREE WIRE ENAMEL COMPOSITION
VERNIS ISOLANT EXEMPT DE SOLVANT POUR FIL MÉTALLIQUE

(30) Priorität: 09.08.2011 DE 102011052518
(43) Veröffentlichungstag der Anmeldung: 18.06.2014
(73) Patentinhaber: Elantas GmbH, 46483 Wesel (DE)
(72) Erfinder: HALFAR, Ronnie, 24220 Flintbek (DE); TÖDTER-KÖNIG, Sascha, 22763 Hamburg (DE); LIENERT, Klaus-W., 22763 Hamburg (DE); ROST, Simon, 21514 Büchen (DE); HARTKOPP, Stefan, 22767 Hamburg (DE); MORITZ, Hans-Ulrich, 21227 Bendestorf (DE)
(74) Vertreter: de Vries, Adriaan Jacobus
(86) Internationale Anmeldenummer: PCT/EP2012/065363
(87) Internationale Veröffentlichungsnummer: WO 2013/020953

(56) Entgegenhaltungen:
- CN-A- 101 514 276
- CN-A- 101 783 214
- DE-A1- 19 542 564
- DE-A1- 19 600 150
- US-A- 4 075 179
- US-A- 4 081 427
- US-A1- 2008 128 154

## Beschreibung

Die vorliegende Erfindung betrifft eine neue lösemittelfreie Drahtlackzusammensetzung und deren Verwendung.

Polyesterimidlacke sind aus dem Stand der Technik bekannt, z.B. aus der DE-OS 1445263, DE-OS 1495100 und der WO 91/07469 (PCT-EP 90/01911). Derartige Lacke weisen gute mechanische, thermische und chemische Eigenschaften auf. Aufgrund dessen haben sie in der Lackdrahtindustrie Verbreitung gefunden.

Die Bindemittel für polyesterimidhaltige Drahtlacke bestehen aus mittelmolekularen Verbindungen, die in üblichen Lacklösemitteln so gut wie unlöslich sind. Daher werden als Lösemittel für diese Drahtlacke kresolische Lösemittel verwendet. Hierzu zählen Phenole, Isomere des Kresols (monomethylierte Phenole) sowie Xylenole, d.h. mehrfach methylierte Phenole (vgl. hierzu L. Wells und H. Strunk, 1993, Proc. Electrical Electronics Insulation Conference, S. 172). Üblicherweise werden die kresolischen Lösemittel zusammen mit Verschnittmitteln verwendet. Hierfür kommen z.B. Xylol, SolventnaphtaR, Toluol, Ethylbenzol, Cumol, Schwerbenzol sowie verschiedene Solvesso^{R} und Shellsol^{R}-Typen sowie Deasol^{R} in Betracht.

Das Aufbringen auf den Draht erfolgt durch einen Lackierschritt und anschließendes Einbrennen. Dabei vernetzt das Harz und wird unlöslich und unschmelzbar. Nach dem bisherigen Stand der Technik wird dieser Vorgang mehrmals (10 bis 20 mal) wiederholt, bis ein porenfreier Film erhalten ist. Die Lackiergeschwindigkeit ist abhängig vom Durchmesser des Drahtes. Die Ofentemperatur liegt üblicherweise zwischen 500 und 700°C. Die Temperatur des Drahtes liegt bei maximal 300°C. Während des Lackierprozesses wird der Kupferdraht mehrfach erwärmt und wieder abgekühlt. Aus energetischer Sicht ist daher dieses Verfahren aufwendig.

Eine Alternative besteht darin, Bindemittel durch ein Extrusionsverfahren aufzubringen. Hierfür kommen in erster Linie thermoplastische Materialien in Betracht. Diese erfüllen allerdings nicht die Anforderungen an moderne Drahtlacke und Lackdrähte, denn die Wärmebeständigkeit liegt üblicherweise nur bei 120°C. Für moderne Anwendungen in Spulen- und Motorenbau sind aber Beständigkeiten bei Temperaturen von mehr als 155°C erforderlich.

Die Extrusionsbeschichtung von Wickeldrähten und damit von Drahtlacken ist aus dem Stand der Technik bekannt. So wird in der US 4145474 die Extrusion von Polyethylenterephthalat beschrieben. Bekannt ist auch eine Extrusionsbeschichtung von Drähten mit Polyethersulfon aus der DE 2911269 und der EP 0017062. Gemäß der EP 0024674 wird die Extrusion von Polyethylenterephthalat, welches Titandioxid als Füllstoff enthält, beschrieben. Schließlich ist aus der EP 0030717 die Herstellung eines Zweischichtdrahtes durch Extrusion beschrieben.

Bei den genannten Verfahren handelt es sich aber um eine reine Beschichtung mit thermoplastischen Komponenten. Infolge der mangelnden Wärmebeständigkeit sind diese für moderne Anwendungen mit einer Wärmeentwicklung von mehr als 155°C nicht geeignet. Hinweise auf die Problematik der mangelnden Wärmebeständigkeit sind all diesen Schriften nicht zu entnehmen.

Aus der US 4075179 sind Drahtlackzusammensetzungen bekannt, die bestimmte vernetzbare Struktureinheiten enthalten und sich lösemittelfrei verarbeiten lassen. Die Nachvernetzung erfolgt nach dieser Schrift durch eine Transesterifizierung. Dabei wird Glycol zunächst freigesetzt und anschließend entfernt. Bei der Entfernung von Glycol in dem Härtungsofen kann es zu Störungen der Beschichtung kommen, z.B. Blasenbildung bzw. Schädigung der Oberfläche.

Aus der US 20080128154 sind polyimidhaltige Bindemittel bekannt, welche auf Drähte mittels eines Extruders aufgebracht werden. In diesem Stand der Technik ist jedoch keine Nachvernetzung offenbart.

Aufgabe der vorliegenden Erfindung ist es nunmehr, eine lösemittelfreie Drahtlackzusammensetzung zur Verfügung zu stellen, die in Extrusionsverfahren aufgetragen wird, aber gleichwohl die Anforderungen an die modernen Anwendungen im Spulen- und Motorenbau erfüllt. Insbesondere soll die Anwendung die Anforderungen auch in Temperaturbereichen von mehr als 155°C erfüllen. Die erhaltenen Lackdrähte sollen die gängigen Normen für Wickeldrähte erfüllen.

Diese Aufgabe wird durch lösemittelfreie Drahtlackzusammensetzungen enthaltend extrusionfähige polyesterimidhaltige Bindemittel, hergestellt aus Polyolen, Polycarbonsäuren, imidbildenden Komponenten und vernetzbaren Strukturelementen, die ungesättigte Bindungen aufweisen aufweisen und nach der Extrusion mittels UV- oder IR-Strahlung vernetzbar sind, gelöst.

Für die Herstellung der Polyesterimide eignen sich verschiedene Alkohole, insbesondere Diole und Triole. Beispiele sind Ethylenglykol, 1,2- und 1,3-Propylenglykol, 1,2-, 1,3- und 1,4-Butandiol, 1,5-Pentandiol, Neopentylglykol, Diethylenglykol, Triethylenglykol, Glycerin, Trimethylolethan, Trimethylolpropan und Tris-2-Hydroxyethylisocyanurat.

Besonders bevorzugt ist erfindungsgemäß der Einsatz von Diolen. Hierbei kommen insbesondere Ethylenglykol und Diethylenglykol zum Einsatz.

Geeignete Carbonsäuren für die Herstellung von Polyesterimiden sind aromatische Säuren und deren Derivate. Beispiele sind Phthalsäure, Isophtalsäure, Terephthalsäure, 2,6-Naphthalindicarbonsäure und deren veresterbare Derivate. Zu den veresterbaren Derivaten zählen z.B. Anhydride und die niederen Alkylester der genannten Säuren, z.B. Methyl-, Ethyl-, Propyl-, Butyl-, Amyl-, Hexyl- und Octylester. Einsetzbar sind die Halbester, die Diacylester und auch die Mischungen dieser Verbindungen. Ebenso kommen auch Säurehalogenide in Betracht. Einsetzbar sind erfindungsgemäß auch aliphatische Dicarbonsäuren, z.B. Oxalsäure, Malonsäure, Bernsteinsäure, Glutarsäure, Adiponsäure, Pimelinsäure, Acelainsäure, Sebacinsäure, Maleinsäure, Fumarsäure oder Sorbinsäure sowie deren veresterbare oder umesterbare Derivate. Erfindungsgemäß besonders bevorzugt ist der Einsatz von Terephthalsäure.

Die erfindungsgemäß eingesetzten imidhaltigen Komponenten sind für die thermischen Eigenschaften verantwortlich. Diese Komponenten können beispielsweise durch Reaktionen zwischen Verbindungen erhalten werden, von denen die eine fünfgliedrige, cyclische Carbonsäureanhydridgruppierungen und mindestens eine weitere funktionelle Gruppe besitzen, während die andere außer einer primären Aminogruppe noch mindestens eine weitere funktionelle Gruppe enthält. Diese weiteren funktionellen Gruppen sind vor allem Carboxylgruppen oder Hydroxylgruppen. Es können aber auch weitere primäre Aminogruppen oder Carbonsäureanhydridgruppen zum Einsatz kommen.

Beispiele für Verbindungen mit einer zyklischen Carbonsäureanhydridgruppierung und weiteren funktionellen Gruppen sind insbesondere Pyromellithsäuredianhydrid und Trimellithsäureanhydrid. Außerdem kommen auch weitere aromatische Carbonsäureanhydride in Betracht, z.B. die Naphthalintetracarbonsäureanhydride oder die Dianhydride von Tetracarbonsäuren mit zwei Benzolkernen im Molekül, bei denen die Carboxylgruppen in 3,3',4- und 4'-Stellung stehen.

Beispiele für Verbindungen mit einer primären Aminogruppe sind insbesondere diprimäre Diamine.
Z.B. Ethylendiamin, Tetramethylendiamin, Hexamethylendiamin, Nonamethylendiamin und andere aliphatische diprimäre Diamine. Es kommen auch aromatische diprimäre Diamine, wie Benzidin, Diaminediphenylmethan, Diaminodiphensulfon, -sulfoxid, -ether, -thioether, Phenylendiamine, Toluylendiamine sowie Diamine mit drei Benzolkernen im Molekül in Betracht, z.B. Bis(4-aminophenoxy)-1,4-benzol.

In Betracht kommen erfindungsgemäß auch cycloaliphatische Diamine, wie das 4,4'-dicyclohexylmethandiamin.

Als aminogruppenhaltige Verbindungen mit einer weiteren funktionellen Gruppe sind auch Aminoalkohole verwendbar, z.B. Monoethanolamin, Monopropanolamin, Aminocarbonsäuren, z.B. Glycin, Aminopropansäure, Aminocapronsäure oder Aminobenzoesäure. Besonders bevorzugt wird der Einsatz des Reaktionsproduktes von 2 Mol Trimellithsäureanhydrid mit einem Mol 4,4'-Diaminodiphenylmethan.

Die erfindungsgemäß eingesetzten vernetzbaren Strukturelemente können in der Hauptkette der Polymere oder als Endgruppen eingebaut sein. Erfahrungsgemäß sind für die Vernetzung durch UV- und IR-Strahlung ungesättigte Bindungen notwendig. Kettenständig eingebaute Strukturen bestehen aus ungesättigten Carbonsäuren, die in den erfindungsgemäßen Bindemitteln verwendbar sind. Diese sind Maleinsäure, Fumarsäure, Tetrahydrophthalsäure, Endomethylentetrahydrophthalsäure, Ithaconsäure, deren Ester, Anhydride oder Säurechloride.

Terminal eingebaute vernetzungsfähige Gruppen sind 3-Methyl-1-buten-1-ol, Allylether, Acrylsäure, Methacrylsäure, Dicyclopentenstrukturen, hergestellt durch Addition von niederen Dicarbonsäuren, z.B. Maleinsäure, Bernsteinsäure an Dicyclopentadien, das Reaktionsprodukt von Tetrahydrophthalsäureanhydrid mit primären Aminen, die noch eine zweite funktionelle Gruppe haben, z.B. Ethanolamin, Propanolamin, Butanolamin. Erfindungsgemäß geeignet sind auch verschiedene Allylether von Polyolen, z.B. Trimethylolpropanmono- und -diallylether als ketten- oder endständige vernetzbare Gruppierungen.

Sofern Elektronenstrahlen zur Vernetzung eingesetzt werden, müssen nicht unbedingt ungesättige Strukturelemente vorhanden sein.

Zur Herstellung der Polyesterimidharze werden die bekannten Umesterungskatalysatoren verwendet, wie sie dem Fachmann bekannt sind. Hierzu zählen Schwermetallsalze, organische Titanate, Cer- und Zinnverbindungen sowie organische Säuren, z.B. p-Toluolsulfonsäure.

Beispiele für Schwermetallsalze sind Bleiacetat und Zinkacetat. Zu den einsetzbaren Titanaten gehören beispielsweise Tetra-N-Butyltitanat, Tetraisopropyltitanat, Tetrapropyltitanat, Tetrabutyltitanat, Tetraamyltitanat, Tetrahexyltitanat, Tetraethyltitanat, Tetramethyltitanat, Diisopropyldibutyltitanat oder Amyltitanate, z.B. Tetraphenyltitanat, Tetracresyltitanat, Tetrahexyltitanat oder auch Triethanolamintitanat.

Für eine Vernetzung mit UV-Strahlung werden auf den Strahler abgestimmte UV-Initiatoren den erfindungsgemäßen Bindemitteln zugegeben. Beispiele hierfür sind: 1-Hydroxy-cyclohexyl-phenyl-keton, 2-Hydroxy-2-methyl-1-phenyl-1-propanon, 2-Hydroxy-1-[4-(2-hydroxyethoxy-phenyl]-2-methyl-1-propanon, Methylbenzoylformate.

Für die thermische Vernetzung werden Peroxide zugesetzt. Beispiele sind: Dicumylperoxid, Dibenzoylperoxid, 2,5-Dimethyl-2,5-di(tert-butylperoxy)hexine-3, Di-tert-butylperoxid, 2,5-Dimethyl-2,5-di(tert-butylperoxy)hexan, tert-Butyl-cumyl-peroxid, Di(tert-butylperoxyisopropyl)benzol, Butyl-4,4-di(tert-butylperoxy)-valerat, 1,1-Di(tert-butylperoxy), -3,3,5-trimethyleyelohexan, tert-Butylperoxybenzoat, Di(4-methylbenzoylperoxid, Di(2,4-dichlorobenzoyl)peroxid. Einsetzbar sind auch C-C-labile Initiatoren, z.B. 1,1,2,2-Tetraphenylethandiol (Benzpinakol), an den Benzolkernen substituierte Benzpinakole, 1,2-ditert-butyl Ethandiol und dessen Derivate, 2,3-Dimethy-2,3-diphenylbutan, Poly-1,4.diisopropylbenzol.
Eine Kombination von thermischer und Strahlungshärtung ist durch Zugabe thermischen und Strahleninitiatoren möglich.

Die erfindungsgemäßen extrusionsfähigen polyesterimidhaltigen Bindemittel werden vorzugsweise hergestellt aus:
30 - 60 Gew.%, bezogen auf die Harzmasse, bevorzugt 35 - 55 Gew.%, besonders bevorzugt 40 - 50 Gew.% kettenständige imidbildende Komponenten,
2-20 Gew.%, bevorzugt 5-15 Gew.%, besonders bevorzugt 7-11 Gew.% ungesättigte Carbonsäuren. Die Differenz zu 100 Gew.% besteht aus Polyesterimidharz, enthaltend die üblichen Bausteine. Bei den Mengenangaben handelt es sich um Gew.% bezogen auf die Harzmasse.

Die thermische Nachvernetzbarkeit wird durch Zumischen von 0,5 - 6 Gew.%, bevorzugt 1 - 5 Gew.%, besonders bevorzugt 1,5-4 Gew.% peroxidische Vernetzer erreicht.

Die photochemische Nachvernetzbarkeit wird durch Zumischen von 0,3 bis 6 Gew.%, bevorzugt 0,6 bis 5 Gew.%, besonders bevorzugt 1 bis 4 Gew.% UV-Initiator erreicht.

Bei den Mengenangaben bezüglich der zugemischten Komponenten handelt es sich um Gew.% bezogen auf die extrudierbare Formulierung.

Die erfindungsgemäße Drahtlackzusammensetzung kann noch übliche Hilfsmittel und Additive enthalten. Bevorzugt werden Mengen bis zu 1 Gew.%, bezogen auf das Gesamtgewicht der Komponenten. Als Hilfsstoffe für die Drahtlackzusammensetzung können beispielsweise auch verlaufs- und haftungsverbessernde Additive eingesetzt werden.

Die Herstellung der Polyesterimidharze erfolgt erfindungsgemäß üblicherweise dadurch, dass die Alkohol-, Carbonsäure- und imidbildenden Komponenten in einer Schmelzkondensation umgesetzt werden. Zur Reaktionskontrolle können das anfallende Destillat, die Säure- oder OH-Zahl herangezogen werden.

Nach der Kondensation werden die Harze abgekühlt, gemahlen und gesiebt. Danach werden die für die Vernetzung notwendigen Initiatoren zugegeben und homogenisiert.

Die so hergestellten erfindungsgemäßen extrusionsfähigen polyesterimidhaltigen Bindemittel können auf den Drahtlack aufgebracht werden. Hierzu werden sie in einem Extruder aufgeschmolzen. Der beschichtete Draht wird sodann durch eine Aushärtungszone geführt. Hier wird die Vernetzung mittels Wärme und/oder mittels Strahlung durchgeführt.

Der zu beschichtende Draht wird üblicherweise bei Raumtemperatur zugeführt, kann aber auch vorgewärmt sein, oder auch geglüht werden. Übliche Abzugsgeschwindigkeiten liegen zwischen 5 und 600 m/min., je nach Dicke des zu beschichtenden Drahtes.

### Beispiele:

### Beispiel 1 Harz 1

Ein Dreihalskolben mit Thermometer, Rührer und Rückflusskühler wird mit 30,596 g 1,2,3,6-tetrahydro-N-(2-hydroxyethyl)phthalimid, 0,017 g Methylhydrochinon und 14,275 g Ethylenglykol befüllt und auf 130 °C erhitzt. Bei 130 °C werden 32,386 g Trimellitsäureanhydrid zugegeben und auf 190 °C erhitzt. Sobald 2,7 g Destillat erhalten werden, wird das Gemisch auf 130 °C gekühlt. Nach Zugabe von 14,442 g Diaminodiphenylmethan wird auf 150 °C erhitzt und ein Stunde gerührt, anschließend wird auf 190 °C erhitzt und solange gerührt bis insgesamt 5,9 g Destillat erhalten werden. Dann wird auf 150 °C gekühlt und zur Reaktionsmischung werden 8,251 g Maleinsäureanhydrid und 0,033 g Methylhydrochinon gegeben. Es wird auf 195 °C erhitzt und solange gerührt bis zusätzlich 1,2 g Destillat erhalten werden. Es wird anschließend im Membranpumpenvakuum weitergerührt bis weitere 2,4 g Destillat erhalten werden. Das Reaktionsprodukt wird ohne weitere Aufarbeitung abgefüllt.

### Beispiel 2 Harz 2

Ein Dreihalskolben mit Thermometer, Rührer und Rückflusskühler wird mit 30,596 g 1,2,3,6-tetrahydro-N-(2-hydroxyethyl)phthalimid, 0,017 g Methylhydrochinon und 14,275 g Ethylenglykol befüllt und auf 130 °C erhitzt. Bei 130 °C werden 32,386 g Trimellitsäureanhydrid zugegeben und auf 190 °C erhitzt. Sobald 2,7 g Destillat erhalten werden, wird das Gemisch auf 130 °C gekühlt. Nach Zugabe von 14,442 g Diaminodiphenylmethan wird auf 150 °C erhitzt und ein Stunde gerührt, anschließend wird auf 190 °C erhitzt und solange gerührt bis insgesamt 5,9 g Destillat erhalten werden. Dann wird auf 150 °C gekühlt und zur Reaktionsmischung werden 7,373 g Maleinsäureanhydrid, 1,622 g Dimethylterephthalat und 0,033 g Methylhydrochinon gegeben. Es wird auf 195 °C erhitzt und solange gerührt bis zusätzlich 1,3 g Destillat erhalten werden. Es wird anschließend im Membranpumpenvakuum weitergerührt bis weitere 2,4 g Destillat erhalten werden. Das Reaktionsprodukt wird ohne weitere Aufarbeitung abgefüllt.

### Beispiel 3 Harz 3

Ein Dreihalskolben mit Thermometer, Rührer und Rückflusskühler wird mit 6,303 g 3-Methyl-3-buten-1-ol, 7,178 g Maleinsäureanhydrid, 0,008 g Methylhydrochinon befüllt und auf 120 °C erhitzt. Die stark exotherme Reaktion wird im Wasserbad gekühlt. Nach Beendigung der Reaktion wird auf 130 °C erhitzt. Es werden 20,600 g Ethylenglykol und 11,788 g Ethyldiglykol und 30,230 g Trimellitsäureanhydrid zugegeben. Die Reaktionsmischung wird auf 190 °C erhitzt und solange gerührt bis 2,5 ml Destillat erhalten werden. Es wird auf 130 °C gekühlt und 13,480 g Diaminodiphenylmethan werden zugegeben. Es wird auf 190 °C erhitzt und solange gerührt bis insgesamt 8,1 g Destillat erhalten werden. Es wird auf 150 °C gekühlt und 0,031 g Methylhydrochinon, 3,851 g Maleinsäureanhydrid 6,454 g Endomethylentetrahydrophthalsäure und 0,078 g Butyltitanat werden zugegeben. Die Reaktionsmischung wird auf 190 °C erhitzt und solange gerührt bis 1,2 g zusätzliches Destillat aufgefangen worden sind. Es wird anschließend im Membranpumpenvakuum weitergerührt bis weitere 4,4 g Destillat angefallen sind. Das Reaktionsprodukt wird ohne weitere Aufarbeitung abgefüllt.

### Beispiel 4 Harz 4

Ein Dreihalskolben mit Thermometer, Rührer und Rückflusskühler wird mit 2,575 g Wasser, 6,935 g Maleinsäureanhydrid, 0,008 g Methylhydrochinon befüllt, auf 100 °C erhitzt und 30 Minuten gerührt. Anschließend wird auf 130 °C erhitzt und 10,025 g Dicyclopentadien werden tropfenweise zugegeben. Nach Beendigung der Zugaben wird eine Stunde bei 130 °C gerührt. Es werden 11,390 g Ethyldiglykol 15,369 g Diethylenglykol und 29,209 g Trimellitsäureanhydrid zugegeben und auf 190 °C erhitzt. Sobald 3,3 g wässriges Destillat erhalten sind, wird auf 130 °C gekühlt und 13,025 g Diaminodiphenylmethan werden zugegeben. Es wird auf 190 °C erhitzt und solange gerührt, bis insgesamt 5,8 g Destillat erhalten worden sind. Es wird auf 150 °C gekühlt und es werden 7,442 g Maleinsäureanhydrid, 0,030 g Methylhydrochinon und 3,991 g Ethylenglykol zugegeben. Die Reaktionsmischung wird auf 190 °C erhitzt und solange gerührt, bis 1,4 g zusätzliches Destillat erhalten worden sind. Unter Membranpumpenvakuum wird weiter gerührt, bis weitere 2,57 g Destillat angefallen sind. Das Reaktionsprodukt wird ohne weitere Aufarbeitung abgefüllt.

### Beispiel 5 Extrusionsharz 1

Es wird eine 30 %ige Lösung des Harzes aus Beispiel 1 in Tetrahydrofuran(THF) hergestellt. Die Lösung wird mit 2,5 % Dicumylperoxid versetzt (bez. auf Harz). 0,3 mm Kupferbleche werden damit beschichtet. Die beschichteten Bleche werden 30 Minuten bei 90 °C getrocknet. Anschließend werden die Bleche bei 250 °C 15 Minuten ausgehärtet. Es werden starke, glatte und gut haftende Filme mit 10 µm Lackfilmstärke erhalten.

Die Durchschlagspannung beträgt (IEC 60464) 2,4 kV. Der Dornbiegeversuch (IEC 60464 Teil 2) um 1 mm Dorn wird gehalten.

Wird das Lösemittel vorsichtig im Vakuum abgezogen, erhält man ein festes Harz, das, nachdem es gemahlen und gesiebt wurde, in einem modifizierten Extruder auf einen 0,9 mm Kupferdraht extrudiert wurde. Der Draht wird 1 Minute bei 300°C nachvernetzt. Es wird ein glatter, gut haftender Lackdraht erhalten. Vor der Vernetzung ist der Lackfilm mit N-Methylpyrrolidon ablösbar, danach nicht mehr.

### Beispiel 6 Extrusionsharz 2

Es wir deine 30 %ige Lösung des Harzes aus Beispiel 2 in THF hergestellt und mit 2,5 % Dicumylperoxid, bezogen auf Harz, versetzt. 0,3 mm Kupferbleche werden damit beschichtet. Die beschichteten Bleche werden 30 Minuten bei 90 °C getrocknet. Anschließend wird die Beschichtung bei 250 °C 15 Minuten ausgehärtet. Es werden starke, glatte und gut haftende Filme mit 10 µm Lackfilmstärke erhalten.

Die Durchschlagspannung beträgt (IEC 60464) 2,6 kV. Der Dornbiegeversuch (IEC 60464 Teil 2) um 1 mm Dorn wird gehalten.

Wird das Lösemittel vorsichtig im Vakuum abgezogen erhält man ein festes Harz, das nachdem es gemahlen und gesiebt wurde, in einem modifizierten Extruder auf einen 0,9 mm Kupferdraht extrudiert wurde. Der Draht wird 1 Minute bei 300°C nachvernetzt. Es wird ein glatter, gut haftender Lackdraht erhalten. Vor der Vernetzung ist der Lackfilm mit N-Methylpyrrolidon ablösbar, danach nicht mehr.

### Beispiel 7 Extrusionsharz 3

Es wird eine 30 %ige Lösung des Harzes aus Beispiel 3 in THF hergestellt. Die Lösung wird mit 2,5 % Dicumylperoxid versetzt (bez. auf Harz). 0,3 mm Kupferbleche werden damit beschichtet. Die beschichteten Bleche werden 30 Minuten bei 90 °C getrocknet. Anschließend wirde die Beschichtung bei 250 °C 15 Minuten ausgehärtet. Es werden starke, glatte und gut haftende Filme mit 10 µm Lackfilmstärke erhalten.

Die Durchschlagspannung beträgt (IEC 60464) 2,4 kV. Der Dornbiegeversuch (IEC 60464 Teil 2) um 1 mm Dorn wird gehalten.

Wird das Lösemittel vorsichtig im Vakuum abgezogen erhält man ein festes Harz, das, nachdem es gemahlen und gesiebt wurde, in einem modifizierten Extruder auf einen 0,9 mm Kupferdraht extrudiert wurde. Der Draht wurde 1 Minute bei 300°C nachvernetzt. Es wurde ein glatter, gut haftender Lackdraht erhalten. Vor der Vernetzung ist der Lackfilm mit N-Methylpyrrolidon ablösbar, danach nicht mehr.

### Beispiel 8 Extrusionsharz 4

Es wird eine 30 %ige Lösung des Harzes aus Beispiel 4 in THF hergestellt. Die Lösung wird mit 2,5 % Dicumylperoxid versetzt (bez. auf Harz). 0,3 mm Kupferbleche werden damit beschichtet. Die beschichteten Bleche werden 30 Minuten bei 90 °C getrocknet. Anschließend wurde die Beschichtung bei 250 °C 15 Minuten ausgehärtet. Es werden starke, glatte und gut haftende Filme mit 10 µm Lackfilmstärke erhalten.

Die Durchschlagspannung beträgt (IEC 60464) 2,5 kV. Der Dornbiegeversuch (IEC 60464 Teil 2) um 1 mm Dorn wird gehalten.

Wird das Lösemittel vorsichtig im Vakuum abgezogen erhält man ein festes Harz, das, nachdem es gemahlen und gesiebt wurde, in einem modifizierten Extruder auf einen 0,9 mm Kupferdraht extrudiert wurde. Der Draht wurde 1 Minute bei 300°C nachvernetzt. Es wurde ein glatter, gut haftender Lackdraht erhalten. Vor der Vernetzung ist der Lackfilm mit N-Methylpyrrolidon ablösbar, danach nicht mehr.

### Beispiel 9 Extrusionsharz 5

Es wird eine 30 %ige Lösung des Harzes aus Beispiel 4 in THF hergestellt. Die Lösung wird mit 2 % Benzyldimethylketal versetzt (bez. auf Harz). 0,3 mm Kupferbleche werden damit beschichtet. Die beschichteten Bleche werden 30 Minuten bei 90 °C getrocknet Danach werden die Blech mit UV Licht 2400 mJ/cm² (d.h. 24 cm Abstand, 2,5 min) mit einer Lampe des Typs Höhnle UV 400F/2, 380 W bestrahlt. Es werden starke, glatte und gut haftende Filme mit 10 µm Lackfilmstärke erhalten.

Die Durchschlagspannung beträgt (IEC 60464) 2,6 kV. Der Dornbiegeversuch (IEC 60464 Teil 2) um 1 mm Dorn wird gehalten

Wird das Lösemittel vorsichtig im Vakuum abgezogen, erhält man ein festes Harz, das, nachdem es gemahlen und gesiebt wurde, in einem modifizierten Extruder auf einen 0,9 mm Kupferdraht extrudiert wurden. Eine Nachvernetzung mit einem Strahler Höhnle UV 400F/2, 380 führte zu einem glatten, gut haftenden Lackfilm. Vor der Vernetzung ist der Lackfilm mit N-Methylpyrrolidon ablösbar, danach nicht mehr.

### Vergleichsbeispiel 10 Vergleichsbeispiel mit PET

Handelsübliches Polyethylenterephthalat wird mit flüssigem Stickstoff gekühlt und dann gemahlen, dann wahlweise mit 2,5 % Dicumylperoxid oder 2 % Dimethylbenzylketal versetzt und in einem modifizierten Extruder auf einen 0,9 mm Kupferdraht extrudiert. Weder thermisch noch photochemisch ist eine Nachvernetzung möglich. Der Glasübergang bleibt bei 70°C. Eine Vernetzung erfolgt also nicht.

## Patentansprüche

1. Verwendung einer lösemittelfreien Drahtlackzusammensetzung enthaltend extrusionsfähige polyesterimidhaltige Bindemittel, hergestellt aus Polyolen, Polycarbonsäuren, imidbildenden Komponenten und Strukturelementen, die ungesättigte Bindungen aufweisen und nach der Extrusion mittels UV- oder IR-Strahlung vernetzbar sind,
zur Auftragung auf Drähte mittels Extrusion, **dadurch gekennzeichnet, dass** die Drahtlackzusammensetzung mittels eines Extruders aufgeschmolzen, auf den Draht aufgebracht und anschließend einer Nachvernetzung unterworfen wird.

2. Verwendung nach Anspruch 1 **dadurch gekennzeichnet, dass** der Anteil an kettenständigen imidbildenden Komponenten 30 - 60 Gew.%, an ungesättigten Carbonsäuren 2 bis 20 Gew.% beträgt.

3. Verwendung nach Anspruch 1 oder 2 **dadurch gekennzeichnet, dass** die Strukturelemente thermisch nachvernetzbar sind, wobei die Drahtlackzusammensetzung von 0,5 bis 6 Gew.% peroxidische Vernetzer enthält.

4. Verwendung nach einem der Ansprüche 1 oder 2 **dadurch gekennzeichnet, dass** die Strukturelemente photochemisch vernetzbar sind, wobei die Drahtlackzusammensetzung 0,3 bis 6 Gew.% UV-Initiator enthält.

5. Verfahren zur Herstellung beschichteter Drähte, durch Auftragung mittels Extrusion einer lösemittelfreien Drahtlackzusammensetzung enthaltend extrusionsfähige polyesterimidhaltige Bindemittel, hergestellt aus Polyolen, Polycarbonsäuren, imidbildenden Komponenten und Strukturelementen, die ungesättigte Bindungen aufweisen und nach der Extrusion mittels UV- oder IR-Strahlung vernetzbar sind, **dadurch gekennzeichnet, dass** die Drahtlackzusammensetzung mittels eines Extruders aufgeschmolzen, auf den Draht aufgebracht und anschließend einer Nachvernetzung unterworfen wird.

## Claims

1. Use of a solvent-free wire enamel composition comprising extrudable, polyesterimide-containing binders, prepared from polyols, polycarboxylic acids, imide-forming components, and structural elements which have unsaturated bonds and are crosslinkable by means of UV or IR radiation after extrusion,
for application to wires by extrusion, **characterized in that** the wire enamel composition is melted by means of an extruder, applied to the wire, and then subjected to postcrosslinking.

2. Use according to Claim 1, **characterized in that** the fraction of catenary, imide-forming components is 30-60 wt% and of unsaturated carboxylic acids is 2 to 20 wt%.

3. Use according to Claim 1 or 2, **characterized in that** the structural elements are thermally postcrosslinking, the wire enamel composition comprising from 0.5 to 6 wt% of peroxidic crosslinkers.

4. Use according to either of Claims 1 and 2, **characterized in that** the structural elements are photochemically crosslinkable, the wire enamel composition comprising from 0.3 to 6 wt% of UV initiator.

5. Method for producing coated wires, by applying, by means of extrusion, a solvent-free wire enamel composition comprising extrudable, polyesterimide-containing binders, prepared from polyols, polycarboxylic acids, imide-forming components, and structural elements which have unsaturated bonds and are crosslinkable by means of UV or IR radiation after extrusion, **characterized in that** the wire enamel composition is melted by means of an extruder, applied to the wire, and then subjected to postcrosslinking.

## Revendications

1. Utilisation d'une composition de vernis pour fil sans solvant contenant des liants pouvant être extrudés contenant un polyesterimide, préparés à partir de polyols, de poly(acides carboxyliques), de composants de formation d'imide et d'éléments structuraux, qui présentent des liaisons insaturées et, après l'extrusion, sont réticulables au moyen de rayonnement UV ou IR,
pour le dépôt sur des fils au moyen d'une extrusion, **caractérisée en ce que** la composition de vernis pour fil est fondue au moyen d'une extrudeuse, déposée sur le fil et ensuite soumise à une post-réticulation.

2. Utilisation selon la revendication 1, **caractérisée en ce que** la proportion de composants caténaires de formation d'imide est de 30 à 60 % en poids, la proportion d'acides carboxyliques insaturés est de 2 à 20 % en poids.

3. Utilisation selon la revendication 1 ou 2, **caractérisée en ce que** les éléments structuraux sont post-réticulables thermiquement, la composition de vernis pour fil contenant de 0,5 à 6 % en poids d'agents réticulants peroxydiques.

4. Utilisation selon l'une quelconque des revendications 1 et 2, **caractérisée en ce que** les éléments structuraux sont réticulables photochimiquement, la composition de vernis pour fil contenant 0,3 à 6 % en poids d'initiateur UV.

5. Procédé pour la préparation de fils revêtus, par le dépôt au moyen d'une extrusion d'une composition de vernis pour fil sans solvant contenant des liants pouvant être extrudés contenant un polyesterimide, préparés à partir de polyols, de poly(acides carboxyliques), de composants de formation d'imide et d'éléments structuraux, qui présentent des liaisons insaturées et, après l'extrusion, sont réticulables au moyen de rayonnement UV ou IR, **caractérisé en ce que** la composition de vernis pour fil est fondue au moyen d'une extrudeuse, déposée sur le fil et ensuite soumise à une post-réticulation.
